# EUROPEAN PATENT SPECIFICATION

(11) **EP 4 248 597 B1**
(45) Date of publication and mention of the grant of the patent: **07.05.2025**
(21) Application number: 21809974.5
(22) Date of filing: 08.11.2021
(51) Int. Cl.: H04L 1/18, H04W 76/14

(54) **SIDELINK DATA DUPLICATION**
SIDELINK-DATENDUPLIZIERUNG
DUPLICATION DE DONNÉES DE LIAISON LATÉRALE

(30) Priority: 18.11.2020 FI 20206171
(43) Date of publication of application: 27.09.2023
(73) Proprietor: Nokia Technologies Oy, 02610 Espoo (FI)
(72) Inventor: JI, Lianghai, 9220 Aalborg (DK); BRUUN, Rasmus Liborius, 9400 Nørresundby (DK); MOREJON GARCIA, Carlos Santiago, 9000 Aalborg (DK); KIILERICH PRATAS, Nuno Manuel, 9260 Gistrup (DK); YU, Ling, 02700 Kauniainen (FI); BUTHLER, Jakob Lindbjerg, 9000 Aalborg (DK)
(74) Representative: Mudge, Kevin
(86) International application number: PCT/EP2021/080926
(87) International publication number: WO 2022/106241

(56) References cited:
- WO-A1-2019/200507
- WO-A1-2020/032612
- US-A1- 2019 239 112
- HUAWEI ET AL: "On sidelink packet duplication for Mode 4", vol. RAN WG2, no. Sanya, China; 20180416 - 20180420, 14 April 2018 (2018-04-14), XP051428357, Retrieved from the Internet <URL:http://www.3gpp.org/ftp/Meetings%5F3GPP%5FSYNC/RAN2/Docs/> [retrieved on 20180414]

## Description

### TECHNICAL FIELD

Aspects relate, in general, to telecommunication networks, and more specifically, although not exclusively to methods for selecting radio resources for transmitting sidelink data duplication.

### BACKGROUND

In a telecommunications network, the frameworks for downlink (i.e., signals are forwarded from a base station to a user equipment (UE)) and uplink transmissions (i.e., signals are forwarded from a UE to a base station) are widely deployed. In the context of these frameworks, physical signals transmitted from/to UEs are relayed by network base stations. In contrast, sidelink (SL) transmissions enable direct communications between two UEs without signal relay through a base station. Such transmissions may be used for, e.g., public safety, vehicle-to-everything (V2X) services, Proximity Services (ProSe), sidelink relaying services, device-to-device (D2D) communications, etc. Sidelink transmissions continue to be of interest in 3GPP New Radio (NR), enabling low latency, high reliability and high throughout services.

HUAWEI ET AL: "On sidelink packet duplication for Mode 4", 3GPP DRAFT, R2-1804640 On sidelink packet duplication for Mode 4, relates to packet duplication, including that a mode 4 UE can autonomously select two carriers for data duplication from two orthogonal carrier sets.

United States patent application publication number US 2019239112A1 relates to supporting URLLC in v2x, including that sidelink carriers for transmission of
duplicated data can be selected either by an eNB or by a UE in autonomous mode.

International patent application publication number WO 2020032612A1 relates to carrier reselection for deactivated duplication, including that carriers for data duplication on a sidelink can be selected by a UE from sets of carriers pre-configured by the eNB.

International patent application publication number WO2019200507A1 relates to control of device to device duplication, including that carriers for sidelink data duplication can be selected by an eNB based on CBR measurement.

### SUMMARY

According to the invention, there is provided a method for a first user equipment, UE, for selecting carriers for sidelink data duplication with a second UE, the method comprising receiving, at the first UE, a duplicated sidelink data transmission from the second UE on a third sidelink carrier and a fourth sidelink carrier, comparing, at the first UE, the third and fourth sidelink carriers with the first and second sidelink carriers provided for duplicated sidelink data transmission to the second UE, on the basis of the comparison, associating each one of the third and fourth sidelink carriers to one of a first carrier set and a second carrier set, wherein the first UE is configured to measure sidelink radio conditions of sidelink carriers associated with the first carrier set, and select an active sidelink carrier from the first carrier set according to at least the measurement, and selecting a further sidelink carrier from one of the first carrier set and the second carrier set. The further sidelink carrier can comprise one of the third and fourth sidelink carriers. The further sidelink carrier can be selected from the first carrier set on the basis of a sidelink radio condition.

In an implementation, the first UE is configured to continuously monitor the sidelink radio condition of sidelink carriers associated with the first carrier set. The sidelink radio condition can be a measure of channel busy ratio of the sidelink carrier. The method can further comprise determining whether the third and first sidelink carriers are the same or not, and determining whether the fourth and second sidelink carriers are the same or not.

According to the invention, there is provided a first user equipment, UE, comprising means for: receiving, at the first UE, a duplicated sidelink data transmission from the second UE on a third sidelink carrier and a fourth sidelink carrier, comparing, at the first UE, the third and fourth sidelink carriers with first and second sidelink carriers provided for duplicated sidelink data transmission to the second UE, on the basis of the comparison, associating each one of the third and fourth sidelink carriers to one of a first carrier set and a second carrier set, wherein the first UE is configured to measure sidelink radio conditions of sidelink carriers associated with the first carrier set, and select an active sidelink carrier from the first carrier set according to at least the measurement and selecting a further sidelink carrier from one of the first carrier set and the second carrier set.

According to the invention, there is provided a computer-readable storage medium storing executable instructions that, in response to execution, cause a processor of a first user equipment to perform operations to select carriers for sidelink data duplication with a second UE, the operations comprising receiving a duplicated sidelink data transmission from the second UE on a third sidelink carrier and a fourth sidelink carrier, comparing the third and fourth sidelink carriers with first and second sidelink carriers provided for duplicated sidelink data transmission to the second UE, associating each one of the third and fourth sidelink carriers to one of a first carrier set and a second carrier set, measuring sidelink radio conditions of sidelink carriers associated with the first carrier set, selecting an active sidelink carrier from the first carrier set according to at least the measurement, and selecting a further sidelink carrier from one of the first carrier set and the second carrier set. Operations can further comprise selecting one of the third and fourth sidelink carriers as the further sidelink carrier. Operations can further comprise transmitting data to the second UE using the selected active sidelink carrier and further sidelink carrier; determining the active sidelink carrier on the basis of a measure of channel busy ratio of sidelink carriers of the active carrier set; continuously monitoring sidelink radio conditions of sidelink carriers associated with the first carrier set; determining whether the third and first sidelink carriers are the same, and determining whether the fourth and second sidelink carriers are the same.

### BRIEF DESCRIPTION OF THE DRAWINGS

For a more illustrative understanding of the present disclosure, reference is now made, by way of example only, to the following descriptions taken in conjunction with the accompanying drawings, in which:
Figure 1 is a flowchart of a method according to an example;
Figure 2 is a flowchart of a method according to an example;
Figure 3 is a flowchart of a method according to an example; and
Figure 4 is a schematic representation of a UE according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein. Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

When implementing packet duplication in order to improve SL reliability between an SL transmitter device/UE (TX) and an SL receiving device/UE (RX), the TX measures the channel busy ratios (CBRs) of SL carriers. Note that the term SL carrier is used inter-changeably with and should be taken to also refer to SL sub-carriers and SL resource pools. The CBR provides a useful metric defined as the proportion of the overall SL radio resources that are deemed occupied by ongoing SL transmission(s). It can therefore be used in order to aid selection of carriers for SL transmissions. Accordingly, as one example, the two candidate SL carriers with the lowest CBRs may be selected to transmit SL data/packet duplication. That is, if a SL data/packet is duplicated in order to achieve better communication reliability, the duplicated SL data/packet can be transmitted in different carriers to achieve diversity gain. However, since the CBRs of the different SL carriers are measured locally at one SL UE, the CBRs measured at a peer UE (for, e.g., an SL unicast) may be different, e.g., due to hidden device problems, or due to the fact that the two UEs are far away from each other. Thus, the selected candidate carriers with the lowest CBRs may be different at the two UEs involved in the SL session. Furthermore, since the TX-centric carrier selection mechanism is applied for both of the carriers over which the duplicated SL data is transmitted, it may not always provide the best performance if the SL RX experiences high CBR in at least one of the carriers selected by the TX due to differences in CBR measurements between the TX and RX.

According to an example, a method for selecting carriers for sidelink data duplication is provided. For a pair of UEs (a first UE and a second UE), one carrier is selected based on a CBR measurement at a transmitting (first) UE (i.e., a TX-centric selection), and another carrier is selected based on a CBR measurement at its peer (second) UE (i.e., an RX-centric selection). This enables the duplicated SL data/packet to be transmitted in the two carriers, which are selected based on the SL radio conditions at both the transmitting UE and the receiving UE.

In one embodiment, the RX UE (e.g. the UE to receive the duplicated SL data/packet transmission) can indicate the SL carrier with the lowest CBR measured by the RX UE to the TX UE, e.g., either by using explicit signalling or implicitly. The indicated carrier may be used by the TX UE as one of the two SL carriers for transmitting the duplicated SL data/packet. In this case, the RX UE may select another carrier based on its own CBR measurements, e.g., another carrier with the lowest CBR measurement, which will be used by the TX UE as another SL carrier of the two SL carriers for transmitting the duplicated SL data/packet.

Instead of using signalling to exchange CBR measurements between the two UEs, an implicit mechanism to implement the TX- and RX-centric carrier selection for SL duplication transmission is provided in order to reduce signalling overhead. In addition, by using the TX-centric carrier selection approach, it allows the TX UE to use the carrier with the least channel congestion and, thus, it can avoid worsening a congested carrier. Furthermore, the RX-centric carrier selection approach allows the TX UE to use the best carrier experienced at the RX, thereby improving the reliability of the SL transmission.

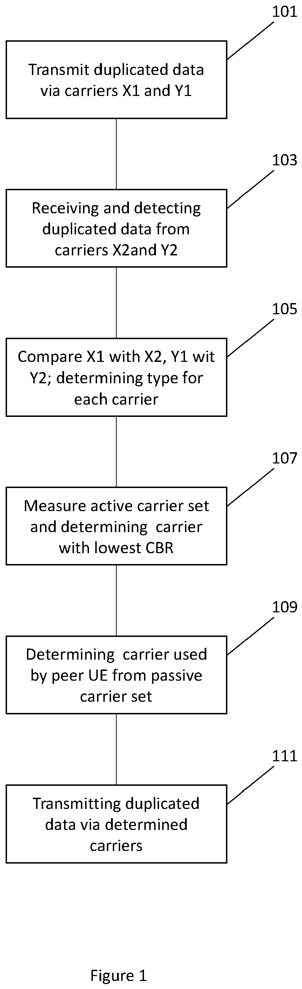

Figure 1 is a flowchart of a method according to an example. In the example of figure 1, in block 101, a TX UE (also referred to herein as a first UE), transmits duplicated data to an RX UE (also referred to herein as a second UE or a peer UE) via carriers X1 and Y1. In block 103, upon receiving a duplicated SL data transmission from the peer UE, a MAC and/or physical layer in the TX UE determines the two carriers (e.g., X2 and Y2 in Figure 1) selected by the peer UE for transmitting the duplicated SL data. In an example, this can be implemented using inter-layer coordination within a SL UE as described in more detail below. According to an example, use of carrier herein includes SL (sub-)carriers/resource pools.

In block 105, by comparing the two carriers that the TX UE selected for its own duplicated transmission (e.g., X1 and Y1) and the two carriers used by the peer UE (e.g., X2 and Y2), the TX UE determines a type for each carrier set in such the way that one carrier belongs to a first carrier set (an active carrier set) and another carrier belongs to a second carrier set ( a passive carrier set). In an example, the first and second carrier sets form a pair of non-overlapping carrier sets, which can be configured by a network, or by a single UE via its own implementation, or by the two SL UEs by using, e.g., a PC5-RRC procedure or by pre-configuration. In one further example, the first and second carrier sets may be determined by a SL UE upon receiving the SL duplication from its peer SL UE via two carriers and based on the corresponding two carriers used by the peer SL UE. In an implementation, each carrier set may contain one or multiple SL carriers. In addition, the configuration of each carrier set may be updated/adjusted by a network, or by a single UE via its own implementation, or by the two SL UEs by using, e.g., a PC5-RRC procedure.

According to an example, an active carrier set describes a carrier set for which the TX UE continuously measures the CBR. A passive carrier set describes a set for which the TX UE monitors the behaviour of the peer (RX) UE regarding this carrier set and determines the carrier used by the peer UE.

In block 107, from the active carrier set, the TX UE applies the TX-centric approach and determines the SL transmission carrier with the lowest measured CBR. In block 109, from the passive carrier set, the TX UE applies the RX-centric approach and determines the SL duplicated transmission carrier selected by the peer UE. In block 111, duplicate data is transmitted using the carriers determined from block 107 and 109. For example, duplicate data can be transmitted from the duplicated SL logical channels (LCHs) associated with the considered sidelink radio bearer (SLRB). In an example, an SLRB can be either an SL signalling radio bearer or an SL data radio bearer with certain communication reliability requirement(s).

Accordingly, no explicit signalling is needed between the two UEs for the alignment of carrier selection. Furthermore, no carrier set is determined as the passive carrier set for both UEs at the same time. Otherwise, if both UEs consider a carrier set as passive carrier set, they would both follow the selection at the peer UE, and then selection of the carrier based on a CBR measurement would not be enabled in either UE.

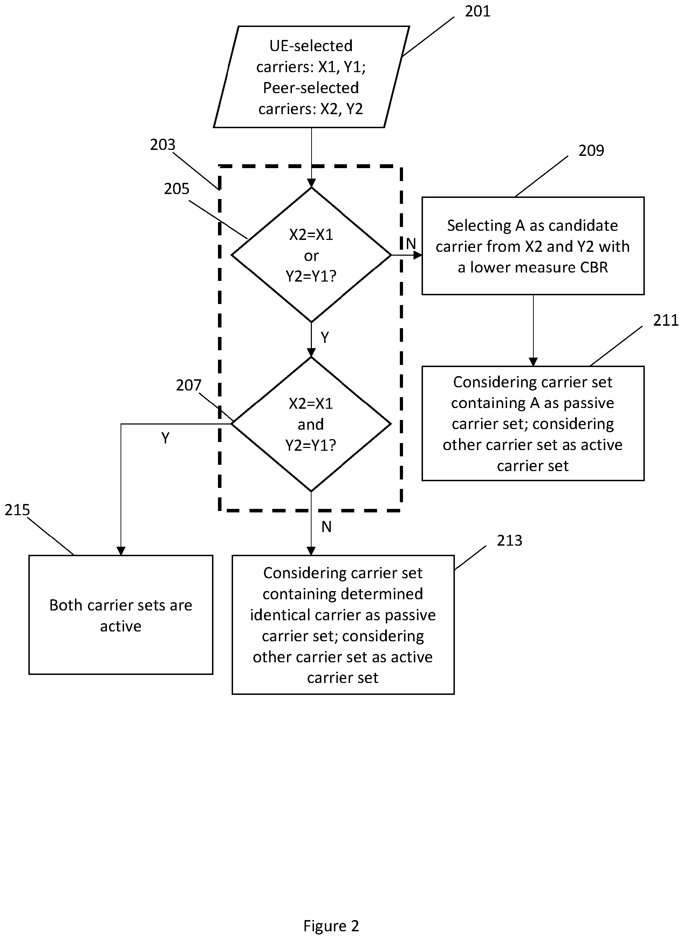

Figure 2 is a flowchart of a method according to an example. In block 201, a TX UE transmits duplicated data to an RX UE via carriers X1 and Y1, and determines the two carriers X2 and Y2 selected by the peer UE for transmitting the duplicated SL data. In block 203, the two carriers that the TX UE selected for its own duplicated transmission (X1 and Y1) and the two carriers used by the peer UE (X2 and Y2) are compared in order to determine a type for each carrier set. In the example of figure 2, the carriers are compared in blocks 205 and 207 by determining whether, firstly, X2=X1 or Y2=Y2 (block 205), and whether X2=X1 and Y2=Y1 (block 207), where the symbol "=" indicates that carrier X1/Y1 is the same carrier as carrier X2/Y2, respectively. Depending on the outcome of the comparisons, in block 209 the TX UE applies the TX-centric approach and determines the SL transmission carrier with the lowest measured CBR. A candidate carrier is selected from X2 and Y2 with a lower measured CBR and this is associated with the passive carrier set in block 211, whilst the other carrier set of the pair of non-overlapping carrier sets is considered as the active carrier set.

If the comparison in block 207 determines that X2=X1 and Y2=Y1 is not satisfied, in block 213, the identified identical/same carrier is associated with the passive carrier set with the other carrier set considered to therefore be the active carrier set. Alternatively, if X2=X1 and Y2=Y1 is satisfied, both carrier sets are considered as active carrier sets in block 215.

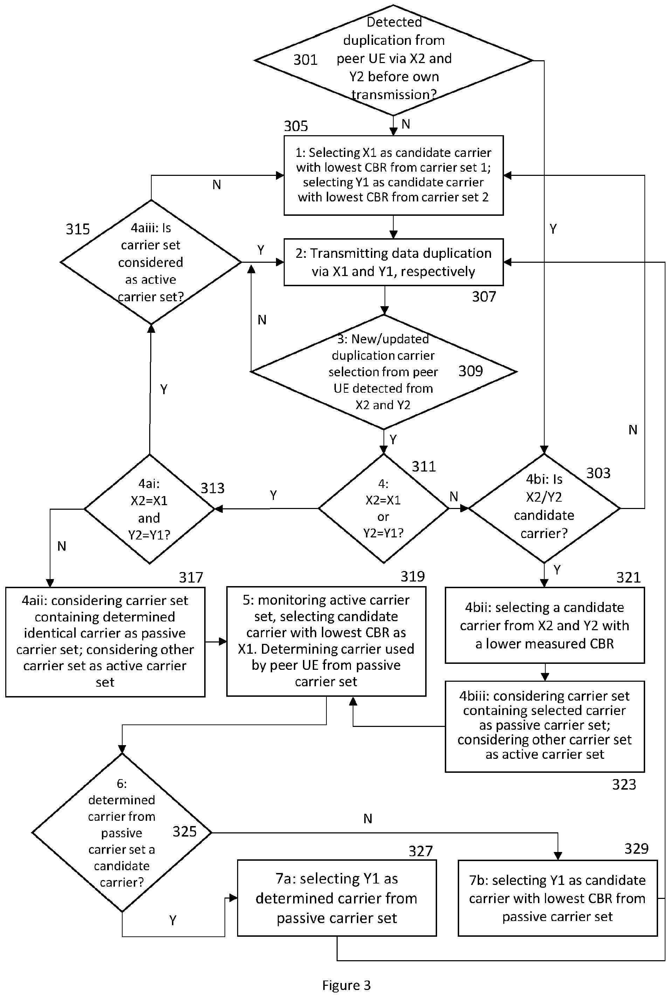

Figure 3 is a flowchart of a method according to an example, which describes an implementation of a carrier-selection mechanism in two UEs, when they use at least two carriers for transmitting SL duplication. In the example of figure 3, two non-overlapping SL carrier sets can be configured for the UEs taking part in the SL communication session (e.g., by using network configuration, by PC5-RRC procedure, or by pre-configuration).

In block 301, a first UE (UE1) checks if it has received a duplicated data from a second UE (the peer UE, UE2) via carriers X2 and Y2 before it starts its own SL duplication. That is, the first UE checks if it is the first one to start the SL duplication. If the first UE has received duplicated data, the process moves to block 303 in order to determine the active/passive carrier set. Otherwise, it proceeds to block 305 where the first UE selects the two candidate carriers with the lowest CBRs, each from one configured SL carrier set, e.g., denoted as X1 and Y1. In an example, an SL carrier is considered as a candidate carrier when its CBR is below the configured CBR threshold associated with the priority of the sidelink logical channel.

In block 307, the first UE starts to transmit duplicated data via the two selected carriers X1 and Y1. In block 309, upon receiving the duplicated SL data from the peer UE, the MAC layer of the first UE determines the two carriers selected by the peer UE for transmitting the duplicated SL data of the duplicated SL logical channel (LCH), e.g. X2 and Y2 in Figure 3. In an example, this can be implemented using inter-layer coordination within the first UE, as:
A. For an SLRB of which data should be duplicated and transmitted between two UEs, the PC5-RRC procedure may be used to configure it between the two peer UEs (e.g. UE1 and UE2) of a sidelink unicast. For example, the configuration may contain the configuration for the PDCP entity, the SLRB identity, the duplicated RLC entities, the SL logical channel identities (LCIDs), and quality-of-service (QoS) parameters/characters.
B. Upon receiving a transport block (TB) from a carrier, the physical layer can submit the TB to the MAC layer, together with the indication regarding the carrier from which the TB is received.
C. Upon detecting the LCID associated to a duplicated SL LCH from the TB, the MAC layer determines the selected carrier from the second UE, based on the indication received from the physical layer.

If the first UE has not detected a duplicated transmission from the second UE or the carrier-selection at the second UE does not change since the last time that the first UE received duplicated data, the process returns to block 307 and, if no carrier-set has been considered as the passive carrier-set (e.g., when the first UE has not detected SL duplication from its peer UE (UE2)), the first UE transmits via its selected carriers (based on the measured CBRs).

In an example, in the case that a carrier set is considered/labelled as the active carrier set, the first UE keeps monitoring the CBRs of the carriers in this set and selects the candidate carrier with the lowest CBR to transmit the SL duplication in block 307, together with the selected carrier from the second UE. Otherwise, the first UE proceeds to block 311 in which the carriers used by the first UE and the ones used by the second UE are compared. In an example, if at least one of them is the same (i.e., X1=X2 or Y1=Y2), the first UE turns to block 313 to further check whether both or only a single carrier(s) are equal. Otherwise, if none of the carriers is of equal value, (i.e., X1≠X2 and Y1≠Y2), the UE turns to block 303 in order to for determine/update the active and passive carrier set selection.

Referring back to block 313, the first UE checks if both carriers are the same. If yes, the first UE turns to block 315 to check if there is a carrier set considered as the active carrier set. Otherwise (i.e., if only one of them is the same), the first UE proceeds to block 317 to determine/consider the carrier set containing the same selected carrier as the passive carrier set, while considering the other set containing different selected carriers as the active carrier set. The first UE then proceeds to block 319.

Referring to block 315, if there is a carrier-set considered as the active carrier set, the first UE monitors the active carrier set and selects the candidate carrier with the best/lowest CBR. In addition, the first UE determines the carrier selected by the second UE from the passive carrier set. The first UE turns proceeds to block 307 to transmit over the two determined carriers. If no carrier-set is considered as the active carrier set, the first UE returns to block 305 to derive the best candidate carriers from both carrier sets.

Referring to block 303, the first UE checks the measured CBRs of the carriers used by the second UE, i.e., X2 and Y2, and determines if they are candidate SL carriers, i.e., whether their CBRs are below the configured thresholds. If none of them is determined to be a candidate SL carrier, both carrier sets are considered as active carrier sets and the first UE returns to block 305. Otherwise, the first UE proceeds to block 321 where, if both X2 and Y2 are candidate carriers, as one example, the first UE may select the candidate carrier with a lower CBR from X2 and Y2. For example, if CBR(X2) < CBR(Y2), select X2; else select Y2, where CBR(X2) and CBR(Y2) represent the CBRs over carrier X2 and Y2 respectively, as measured at the first UE. If only one of the carriers (i.e., either X2 or Y2) is a candidate carrier (i.e., its CBR is below the configured CBR threshold), the first UE selects this candidate carrier. This enables the first to select the better carrier from X2 and Y2 based on its CBR measurement, if both the carriers selected by the second UE are candidate carriers. This enables the selection of the active and passive carrier-sets by taking account of the first UE's conditions, e.g., CBR measurement.

In block 323, the first UE considers the carrier set containing the selected carrier from block 321 as the passive carrier set, while considering the other carrier set as the active carrier set. This, step together with the selection in block 321 enables the first UE to determine/label a carrier set by considering its measurement.

Referring to block 319, the first UE monitors the active carrier set and selects the candidate carrier with the lowest CBR as X1. In addition, the first UE determines the carrier used by the second UE from the passive carrier set. In block 325, the first UE checks if the determined carrier from the passive carrier set (in block 319) is a candidate carrier, e.g., whether the CBR is below the configured CBR threshold associated with the priority of the sidelink logical channel. If it is, in block 327, the first UE selects the carrier Y1 determined in block 319 from the passive carrier set as the determined carrier. Otherwise, the first UE selects the carrier Y1 in block 329 as the candidate carrier. The procedure can iterate as shown in figure 3.

In an example, when the first UE has decided/labelled a carrier set as active and the other as passive, it may be triggered to flip the labels between the two carrier sets under certain conditions. For example, this can be based on the first UE's CBR measurements, such that if the first UE detects that the carrier (e.g., the one determined by the second UE) from its passive carrier set (e.g., set A) has a much higher CBR (e.g., by considering a configured threshold) than the carrier from the active carrier set (the one determined by the first UE itself, e.g., set B) it can switch the labels of the two carrier sets, such that it will select the best candidate carrier with the lowest CBR from the new active carrier set (set A). The process described above with reference to figure 3 still holds in this case.

Examples in the present disclosure can be provided as methods, systems or machine-readable instructions, such as any combination of software, hardware, firmware or the like. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a general-purpose computer, a special purpose computer, an embedded processor or processors of other programmable data processing devices to realize the functions described in the description and diagrams. In particular, a processor or processing apparatus may execute the machine-readable instructions. Thus, modules of apparatus may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode. For example, the instructions may be provided on a non-transitory computer readable storage medium encoded with instructions, executable by a processor.

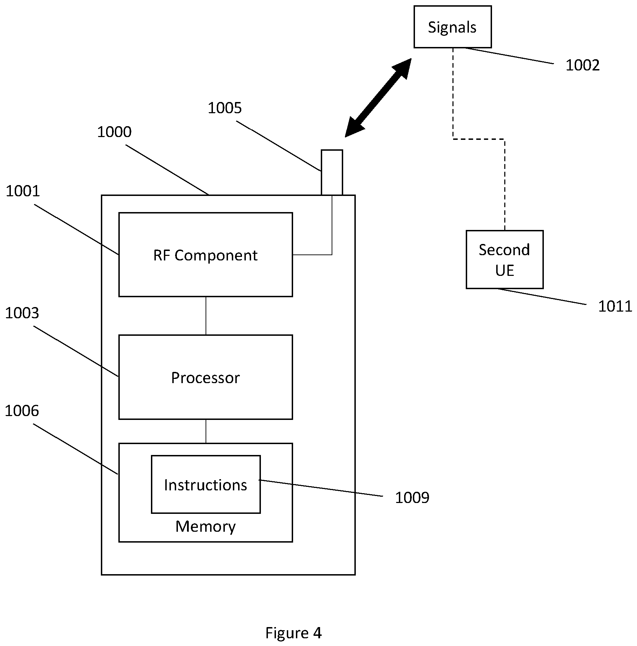

Figure 4 is a schematic representation of a UE according to an example. UE 1000 comprises a radio frequency, RF, circuitry component 1001 configured to transmit or receive communication signals 1002 (using e.g., antenna(e) 1005), and a processor 1003 coupled to the RF circuitry component 1001. A machine/computer-readable storage medium, such as memory 1006, stores executable machine-readable instructions 1009 that, in response to execution, cause the processor 1003 of UE 1000 to perform operations to select carriers for sidelink data duplication with a second UE 1011.

In an example, the operations comprise receiving a duplicated sidelink data transmission from the second UE on a third sidelink carrier and a fourth sidelink carrier, comparing the third and fourth sidelink carriers with first and second sidelink carriers provided for duplicated sidelink data transmission to the second UE, associating each one of the third and fourth sidelink carriers to one of a first carrier set and a second carrier set, measuring sidelink radio conditions of sidelink carriers associated with the first carrier set, selecting an active sidelink carrier from the first carrier set according to at least the measurement, and selecting a further sidelink carrier from one of the first carrier set and the second carrier set.

The processor 1003 can be further configured to perform operations comprising transmitting data to the second UE using the selected active sidelink carrier and further sidelink carrier; determining the active sidelink carrier on the basis of a measure of channel busy ratio of sidelink carriers of the active carrier set; continuously monitoring sidelink radio conditions of sidelink carriers associated with the first carrier set; and determining whether the third and first sidelink carriers are the same, and determining whether the fourth and second sidelink carriers are the same. In an example, selecting a further sidelink carrier is based on the comparison/determination, and in an example one of the third and fourth sidelink carriers can be selected as the further sidelink carrier.

Such machine-readable instructions may also be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

Further, the teachings herein may be implemented in the form of a computer software product, the computer software product being stored in a storage medium and comprising a plurality of instructions for making a computer device implement the methods recited in the examples of the present disclosure.

## Claims

1. A method for a first user equipment, UE, for selecting carriers for sidelink data duplication with a second UE, the method comprising:
receiving (103), at the first UE, a duplicated sidelink data transmission from the second UE on a third sidelink carrier and a fourth sidelink carrier;
comparing (105), at the first UE, the third and fourth sidelink carriers with first and second sidelink carriers provided for duplicated sidelink data transmission to the second UE;
on the basis of the comparison, associating (105) each one of the third and fourth sidelink carriers to one of a first carrier set and a second carrier set, wherein the method further comprises:
measuring (107), by the first UE, sidelink radio conditions of sidelink carriers associated with the first carrier set;
selecting (107), by the first UE, an active sidelink carrier from the first carrier set according to at least the measurement; and
selecting (109) a further sidelink carrier from one of the first carrier set and the second carrier set.

2. The method as claimed in claim 1, wherein the further sidelink carrier comprises one of the third and fourth sidelink carriers.

3. The method as claimed in claim 1 or 2, wherein the further sidelink carrier is selected from the first carrier set on the basis of a sidelink radio condition.

4. The method as claimed in any preceding claim, wherein the first UE is configured to continuously monitor the sidelink radio condition of sidelink carriers associated with the first carrier set.

5. The method as claimed in any preceding claim, wherein the sidelink radio condition is a measure of channel busy ratio of the sidelink carrier.

6. The method as claimed in any preceding claim, wherein comparing the third and fourth sidelink carriers with the first and second sidelink carriers comprises at least one of: determining whether the third and first sidelink carriers are the same or not, and determining whether the fourth and second sidelink carriers are the same or not.

7. The method as claimed in any preceding claim, further comprising:
transmitting (111) data to the second UE using the selected active sidelink carrier and further sidelink carrier.

8. User equipment (1000) comprising means (1001, 1003, 1005, 1006, 1009) for performing the method according to any of claims 1-7.

9. A computer-readable storage medium storing executable instructions that, in response to execution, cause a processor of a first user equipment, UE, to perform operations to select carriers for sidelink data duplication with a second UE, the operations comprising:
receiving (103) a duplicated sidelink data transmission from the second UE on a third sidelink carrier and a fourth sidelink carrier;
comparing (105) the third and fourth sidelink carriers with first and second sidelink carriers provided for duplicated sidelink data transmission to the second UE;
associating (105) each one of the third and fourth sidelink carriers to one of a first carrier set and a second carrier set;
measuring (107) sidelink radio conditions of sidelink carriers associated with the first carrier set;
selecting (107) an active sidelink carrier from the first carrier set according to at least the measurement; and
selecting (109) a further sidelink carrier from one of the first carrier set and the second carrier set.

10. The computer-readable storage medium as claimed in claim 9, comprising further executable instructions that, in response to execution, cause the processor of the first user equipment to perform operations comprising:
selecting one of the third and fourth sidelink carriers as the further sidelink carrier.

11. The computer-readable storage medium as claimed in claim 9 or 10, wherein the further sidelink carrier is selected from the first carrier set on the basis of a sidelink radio condition.

12. The computer-readable storage medium as claimed in any of claims 9 to 11, comprising further executable instructions that, in response to execution, cause the processor of the first user equipment to perform operations comprising:
transmitting (111) data to the second UE using the selected active sidelink carrier and further sidelink carrier.

13. The computer-readable storage medium as claimed in any of claims 9 to 12, comprising further executable instructions that, in response to execution, cause the processor of the first user equipment to perform operations comprising:
determining the active sidelink carrier on the basis of a measure of channel busy ratio of sidelink carriers of the first carrier set.

14. The computer-readable storage medium as claimed in any of claims 9 to 13, comprising further executable instructions that, in response to execution, cause the processor of the first user equipment to perform operations comprising:
continuously monitoring sidelink radio conditions of sidelink carriers associated with the first carrier set.

15. The computer-readable storage medium as claimed in any of claims 9 to 14, comprising further executable instructions that, in response to execution, cause the processor of the first user equipment to perform operations comprising:
determining whether the third and first sidelink carriers are the same, and determining whether the fourth and second sidelink carriers are the same.

## Patentansprüche

1. Verfahren für eine erste Teilnehmereinrichtung, UE, zum Auswählen von Trägern für eine Sidelinkdatenduplizierung mit einer zweiten UE, wobei das Verfahren Folgendes umfasst:
Empfangen (103) einer duplizierten Sidelinkdatenübertragung an der ersten UE von der zweiten UE auf einem dritten Sidelinkträger und einem vierten Sidelinkträger;
Vergleichen (105) des dritten und des vierten Sidelinkträgers an der ersten UE mit einem ersten und einem zweiten Sidelinkträger, die für eine duplizierte Sidelinkdatenübertragung zur zweiten UE bereitgestellt sind;
Verknüpfen (105) von jedem des dritten und des vierten Sidelinkträgers auf Basis des Vergleichs mit einem eines ersten Trägersatzes und eines zweiten Trägersatzes, wobei das Verfahren ferner Folgendes umfasst:
Messen (107) von Sidelinkfunkzuständen von Sidelinkträgern, die mit dem ersten Trägersatz verknüpft sind, durch die erste UE;
Auswählen (107) eines aktiven Sidelinkträgers durch die erste UE aus dem ersten Trägersatz gemäß mindestens der Messung; und
Auswählen (109) eines weiteren Sidelinkträgers aus einem des ersten Trägersatzes und des zweiten Trägersatzes.

2. Verfahren nach Anspruch 1, wobei der weitere Sidelinkträger einen des dritten und des vierten Sidelinkträgers umfasst.

3. Verfahren nach Anspruch 1 oder 2, wobei der weitere Sidelinkträger auf Basis eines Sidelinkfunkzustands aus dem ersten Trägersatz ausgewählt wird.

4. Verfahren nach einem der vorhergehenden Ansprüche, wobei die erste UE dazu ausgelegt ist, den Sidelinkfunkzustand von Sidelinkträgern, die mit dem ersten Trägersatz verknüpft sind, kontinuierlich zu überwachen.

5. Verfahren nach einem der vorhergehenden Ansprüche, wobei der Sidelinkfunkzustand ein Maß eines Kanalbelegungsverhältnisses des Sidelinkträgers ist.

6. Verfahren nach einem der vorhergehenden Ansprüche, wobei das Vergleichen des dritten und des vierten Sidelinkträgers mit dem ersten und dem zweiten Sidelinkträger mindestens eines von Folgendem umfasst:
Bestimmen, ob der dritte und der erste Sidelinkträger derselbe sind oder nicht, und Bestimmen, ob der vierte und der zweite Sidelinkträger derselbe sind oder nicht.

7. Verfahren nach einem der vorhergehenden Ansprüche, das ferner Folgendes umfasst:
Übertragen (111) von Daten unter Verwendung des ausgewählten aktiven Sidelinkträgers und eines weiteren Sidelinkträgers zur zweiten UE.

8. Teilnehmereinrichtung (1000), die Mittel (1001, 1003, 1005, 1006, 1009) zum Durchführen des Verfahrens gemäß einem der Ansprüche 1 bis 7 umfasst.

9. Computerlesbares Speichermedium, auf dem ausführbare Anweisungen gespeichert sind, die in Reaktion auf eine Ausführung einen Prozessor einer ersten Teilnehmereinrichtung, UE, veranlassen, Operationen zum Auswählen von Trägern für eine Sidelinkdatenduplizierung mit einer zweiten UE durchzuführen, wobei die Operationen Folgendes umfassen:
Empfangen (103) einer duplizierten Sidelinkdatenübertragung von der zweiten UE auf einem dritten Sidelinkträger und einem vierten Sidelinkträger;
Vergleichen (105) des dritten und des vierten Sidelinkträgers mit einem ersten und einem zweiten Sidelinkträger, die für eine duplizierte Sidelinkdatenübertragung zur zweiten UE bereitgestellt sind;
Verknüpfen (105) von jedem des dritten und des vierten Sidelinkträgers mit einem eines ersten Trägersatzes und eines zweiten Trägersatzes;
Messen (107) von Sidelinkfunkzuständen von Sidelinkträgern, die mit dem ersten Trägersatz verknüpft sind;
Auswählen (107) eines aktiven Sidelinkträgers aus dem ersten Trägersatz gemäß mindestens der Messung; und
Auswählen (109) eines weiteren Sidelinkträgers aus einem des ersten Trägersatzes und des zweiten Trägersatzes.

10. Computerlesbares Speichermedium nach Anspruch 9, das weitere ausführbare Anweisungen umfasst, die in Reaktion auf eine Ausführung den Prozessor der ersten Teilnehmereinrichtung veranlassen, Operationen durchzuführen, die Folgendes umfassen:
Auswählen eines dritten und eines vierten Sidelinkträgers als den weiteren Sidelinkträger.

11. Computerlesbares Speichermedium nach Anspruch 9 oder 10, wobei der weitere Sidelinkträger aus dem ersten Trägersatz auf Basis eines Sidelinkfunkzustands ausgewählt wird.

12. Computerlesbares Speichermedium nach einem der Ansprüche 9 bis 11, das weitere ausführbare Anweisungen umfasst, die in Reaktion auf eine Ausführung den Prozessor der ersten Teilnehmereinrichtung veranlassen, Operationen durchzuführen, die Folgendes umfassen:
Übertragen (111) von Daten unter Verwendung des ausgewählten aktiven Sidelinkträgers und eines weiteren Sidelinkträgers zur zweiten UE.

13. Computerlesbares Speichermedium nach einem der Ansprüche 9 bis 12, das weitere ausführbare Anweisungen umfasst, die in Reaktion auf eine Ausführung den Prozessor der ersten Teilnehmereinrichtung veranlassen, Operationen durchzuführen, die Folgendes umfassen:
Bestimmen des aktiven Sidelinkträgers auf Basis eines Maßes eines Kanalbelegungsverhältnisses von Sidelinkträgern des ersten Trägersatzes.

14. Computerlesbares Speichermedium nach einem der Ansprüche 9 bis 13, das weitere ausführbare Anweisungen umfasst, die in Reaktion auf eine Ausführung den Prozessor der ersten Teilnehmereinrichtung veranlassen, Operationen durchzuführen, die Folgendes umfassen:
kontinuierliches Überwachen von Sidelinkfunkzuständen von Sidelinkträgern, die mit dem ersten Trägersatz verknüpft sind.

15. Computerlesbares Speichermedium nach einem der Ansprüche 9 bis 14, das weitere ausführbare Anweisungen umfasst, die in Reaktion auf eine Ausführung den Prozessor der ersten Teilnehmereinrichtung veranlassen, Operationen durchzuführen, die Folgendes umfassen:
Bestimmen, ob der dritte und der erste Sidelinkträger derselbe sind, und Bestimmen, ob der vierte und der zweite Sidelinkträger derselbe sind.

## Revendications

1. Procédé pour un premier équipement utilisateur, UE, pour sélectionner des porteuses pour une duplication de données de liaison latérale avec un deuxième UE, le procédé comprenant les étapes suivantes :
recevoir (103), au niveau du premier UE, une transmission de données de liaison latérale dupliquées en provenance du deuxième UE sur une troisième porteuse de liaison latérale et une quatrième porteuse de liaison latérale ;
comparer (105), au niveau du premier UE, les troisième et quatrième porteuses de liaison latérale avec les première et deuxième porteuses de liaison latérale fournies pour la transmission de données de liaison latérale dupliquées au deuxième UE ;
sur la base de la comparaison, associer (105) chacune des troisième et quatrième porteuses de liaison latérale à l'un parmi un premier ensemble de porteuses et un deuxième ensemble de porteuses, dans lequel le procédé comprend en outre les étapes suivantes :
mesurer (107), par le premier UE, des conditions radio de liaison latérale de porteuses de liaison latérale associées au premier ensemble de porteuses ;
sélectionner (107), par le premier UE, une porteuse de liaison latérale active dans le premier ensemble de porteuses au moins selon la mesure ; et
sélectionner (109) une porteuse de liaison latérale supplémentaire dans l'un parmi le premier ensemble de porteuses et le deuxième ensemble de porteuses.

2. Procédé selon la revendication 1, dans lequel la porteuse de liaison latérale supplémentaire comprend l'une des troisième et quatrième porteuses de liaison latérale.

3. Procédé selon la revendication 1 ou 2, dans lequel la porteuse de liaison latérale supplémentaire est sélectionnée dans le premier ensemble de porteuses sur la base d'une condition radio de liaison latérale.

4. Procédé selon l'une des revendications précédentes, dans lequel le premier UE est configuré pour surveiller en continu la condition radio de liaison latérale de porteuses de liaison latérale associées au premier ensemble de porteuses.

5. Procédé selon l'une des revendications précédentes, dans lequel la condition radio de liaison latérale est une mesure du taux d'occupation de canal de la porteuse de liaison latérale.

6. Procédé selon l'une des revendications précédentes, dans lequel la comparaison des troisième et quatrième porteuses de liaison latérale avec les première et deuxième porteuses de liaison latérale comprend au moins l'une des opérations suivantes :
déterminer si les troisième et première porteuses de liaison latérale sont identiques, et déterminer si les quatrième et deuxième porteuses de liaison latérale sont identiques.

7. Procédé selon l'une des revendications précédentes, comprenant en outre les étapes suivantes :
transmettre (111) des données au deuxième UE en utilisant la porteuse de liaison latérale active et la porteuse de liaison latérale supplémentaire sélectionnées.

8. Équipement utilisateur (1000) comprenant des moyens (1001, 1003, 1005, 1006, 1009) pour réaliser le procédé selon l'une des revendications 1 à 7.

9. Support de stockage lisible par ordinateur stockant des instructions exécutables qui, en réponse à l'exécution, amènent un processeur d'un premier équipement utilisateur, UE, à effectuer des opérations pour sélectionner des porteuses pour la duplication de données de liaison latérale avec un deuxième UE, les opérations comprenant les étapes suivantes :
recevoir (103) une transmission de données de liaison latérale dupliquées en provenance du deuxième UE sur une troisième porteuse de liaison latérale et une quatrième porteuse de liaison latérale ;
comparer (105) les troisième et quatrième porteuses de liaison latérale avec les première et deuxième porteuses de liaison latérale fournies pour la transmission de données de liaison latérale dupliquées au deuxième UE ;
associer (105) chacune des troisième et quatrième porteuses de liaison latérale à l'un parmi un premier ensemble de porteuses et un deuxième ensemble de porteuses ;
mesurer (107) des conditions radio de liaison latérale de porteuses de liaison latérale associées au premier ensemble de porteuses ;
sélectionner (107) une porteuse de liaison latérale active dans le premier ensemble de porteuses au moins selon la mesure ; et
sélectionner (109) une porteuse de liaison latérale supplémentaire dans l'un parmi le premier ensemble de porteuses et le deuxième ensemble de porteuses.

10. Support de stockage lisible par ordinateur selon la revendication 9, comprenant des instructions exécutables supplémentaires qui, en réponse à l'exécution, amènent le processeur du premier équipement utilisateur à effectuer des opérations comprenant l'étape suivante :
sélectionner l'une des troisième et quatrième porteuses de liaison latérale comme porteuse de liaison latérale supplémentaire.

11. Support de stockage lisible par ordinateur selon la revendication 9 ou 10, dans lequel la porteuse de liaison latérale supplémentaire est sélectionnée dans le premier ensemble de porteuses sur la base d'une condition radio de liaison latérale.

12. Support de stockage lisible par ordinateur selon l'une des revendications 9 à 11, comprenant des instructions exécutables supplémentaires qui, en réponse à l'exécution, amènent le processeur du premier équipement utilisateur à effectuer des opérations comprenant l'étape suivante :
transmettre (111) des données au deuxième UE en utilisant la porteuse de liaison latérale active et la porteuse de liaison latérale supplémentaire sélectionnées.

13. Support de stockage lisible par ordinateur selon l'une des revendications 9 à 12, comprenant des instructions exécutables supplémentaires qui, en réponse à l'exécution, amènent le processeur du premier équipement utilisateur à effectuer des opérations comprenant l'étape suivante :
déterminer la porteuse de liaison latérale active sur la base d'une mesure du taux d'occupation de canal de porteuses de liaison latérale du premier ensemble de porteuses.

14. Support de stockage lisible par ordinateur selon l'une des revendications 9 à 13, comprenant des instructions exécutables supplémentaires qui, en réponse à l'exécution, amènent le processeur du premier équipement utilisateur à effectuer des opérations comprenant l'étape suivante :
surveiller en continu des conditions radio de liaison latérale de porteuses de liaison latérale associées au premier ensemble de porteuses.

15. Support de stockage lisible par ordinateur selon l'une des revendications 9 à 14, comprenant des instructions exécutables supplémentaires qui, en réponse à l'exécution, amènent le processeur du premier équipement utilisateur à effectuer des opérations comprenant l'étape suivante :
déterminer si les troisième et première porteuses de liaison latérale sont identiques, et déterminer si les quatrième et deuxième porteuses de liaison latérale sont identiques.
